# EUROPÄISCHE PATENTSCHRIFT

(11) **EP 2 409 256 B1**
(45) Veröffentlichungstag und Bekanntmachung des Hinweises auf die Patenterteilung: **08.08.2018**
(21) Anmeldenummer: 10710828.4
(22) Anmeldetag: 16.03.2010
(51) Int. Cl.: G06F 21/00, G07F 7/10, G06F 21/64, G06Q 20/34

(54) **VERFAHREN ZUR VERFÜGUNGSTELLUNG EINES ZERTIFIKATS, COMPUTERPROGRAMMPRODUKT UND COMPUTERSYSTEM**
METHOD FOR PROVIDING A CERTIFICATE, COMPUTER PROGRAM PRODUCT, AND COMPUTER SYSTEM
PROCÉDÉ DE DÉLIVRANCE D'UN CERTIFICAT, PRODUIT DE PROGRAMME INFORMATIQUE ET SYSTÈME INFORMATIQUE

(30) Priorität: 17.03.2009 DE 102009001623
(43) Veröffentlichungstag der Anmeldung: 25.01.2012
(73) Patentinhaber: Bundesdruckerei GmbH, 10958 Berlin (DE)
(72) Erfinder: BYSZIO, Frank, 16348 Wandlitz (DE)
(74) Vertreter: Richardt Patentanwälte PartG mbB
(86) Internationale Anmeldenummer: PCT/EP2010/053360
(87) Internationale Veröffentlichungsnummer: WO 2010/106054

(56) Entgegenhaltungen:
- EP-A1- 1 263 164
- DE-A1- 10 240 845
- US-B1- 6 834 795
- HELDER GOMES ET AL: "Authentication Architecture for eHealth Professionals" 1. Januar 2007 (2007-01-01), ON THE MOVE TO MEANINGFUL INTERNET SYSTEMS 2007: COOPIS, DOA, ODBASE, GADA, AND IS; [LECTURE NOTES IN COMPUTER SCIENCE], SPRINGER BERLIN HEIDELBERG, BERLIN, HEIDELBERG, PAGE(S) 1583 - 1600 , XP019083306 ISBN: 9783540768357 Section 3.2.6
- DIMITRIOS LEKKAS ET AL: "E-Passports as a Means Towards the First World-Wide Public Key Infrastructure" 28. Juni 2007 (2007-06-28), PUBLIC KEY INFRASTRUCTURE; [LECTURE NOTES IN COMPUTER SCIENCE], SPRINGER BERLIN HEIDELBERG, BERLIN, HEIDELBERG, PAGE(S) 34 - 48 , XP019096046 ISBN: 9783540734079 Section 7
- BENDER J ET AL: "Sicherheitsmechanismen für kontaktlose Chips im deutschen elektronischen Personalausweis. Ein Überblick über Sicherheitsmerkmale, Risiken und Gegenmassnahmen" INTERNET CITATION 1. März 2008 (2008-03-01), XP007912494 ISSN: 0724-4371 Gefunden im Internet: URL:http://www.teli.de/pdf/DuD_3_2008_Sich erheitsmechanismen_Personalausw eis_pdf.pdf> [gefunden am 2010-03-31]
- CHRISTIAN ENGEL: "Auf dem Weg zum elektronischen Personalausweis; Der elektronische Personalausweis (ePA) als universelles Identifikationsdokument" DATENSCHUTZ UND DATENSICHERHEIT, VIEWEG VERLAG, WI LNKD- DOI:10.1007/S11623-006-0060-2, Bd. 30, Nr. 4, 1. April 2006 (2006-04-01), Seiten 207-210, XP019417321 ISSN: 1862-2607

## Beschreibung

Die Erfindung betrifft ein Verfahren zur Verfügungstellung eines Zertifikats, ein Computerprogrammprodukt, insbesondere ein digitales Speichermedium, sowie ein Computersystem.

Aus dem Stand der Technik ist die Verwendung von Chipkarten für die Generierung elektronischer Signaturen an sich bekannt. Auf einer Chipkarte zur Generierung von elektronischen Signaturen ist hierzu ein sogenanntes Zertifikat gespeichert.

Europäische Patentanmeldung EP 1263164 A1 beschreibt ein Verfahren und entsprechendes Token zur Registrierung von Nutzern einer Public-Key-Infrastruktur und ein entsprechendes Registrierungssystem. Das Verfahren erlaubt die Registrierung von Nutzern in einer Public-Key-Infrastruktur mittels Berechtigungsnachweisen, zum Beispiel biometrischen Daten. Das Token, welches einen Prozessor beinhaltet, wird mit einem Schnittstellengerät und einem Speichergerät verbunden. Das Speichergerät beinhaltet einen privaten Schlüssel und einen öffentlichen Schlüssel des Nutzers des Token und außerdem einen privaten Schlüssel einer Zertifizierungsstelle. Ein Eingabegerät liest biometrische Daten des Nutzers, signiert die gelesenen biometrischen Daten mit dem privaten Schlüssel der Zertifizierungsstelle und sendet einen Zertifizierungsanfrage an die Zertifizierungsstelle. Die Zertifizierungsanfrage beinhaltet den öffentlichen Schlüssel, die signierten biometrischen Daten und weitere Berechtigungsnachweise des Nutzers. Die Zertifizierungsstelle verifiziert die empfangenen Daten und speichert die biometrischen Daten in einer Datenbank. Daraufhin gibt die Zertifizierungsstelle ein entsprechendes Zertifikat zurück und speichert es in dem Token. Nach der Registrierung ist das Token ein sicheres Element der Public-Key-Infrastruktur.

Die US Patentanmeldung US006834795 B1 beschreibt ein vereinfachtes Nutzer-Authentifizierungsverfahren an ein Computersystem mittels einer Smartcard. Das Verfahren beinhaltet die Verbindung der Smartcard an das Computersystem und die Eingabe einer Nutzer-Id und eines Passworts. Die Smartcard generiert einen öffentlichen und einen privaten Schlüssel, wobei der öffentliche Schlüssel zu einem Server transportiert wird. Ein digitales Zertifikat wird erstellt und die Smartcard wird aktiviert.

Die deutsche Patentanmeldung DE 10240845 A1 beschreibt einen Proxy zur computergestützten, dezentralen Personalisierung von qualifizierten kryptographischen Signatur-Chipkarten in Public-Key-Infrastrukturen. Zertifizierungsstellen erstellen vorinitialisierte Signatur-Chipkarten mit einem privaten und öffentlichen kryptografischen Schlüsselpaar, die dann direkt von den Registrierungsstellen vor Ort über gesicherte Protokolle mit der Zertifizierungsstelle im Internet die Personendaten abgleichen und dann die Chipkarten in einem Schreib-Lesegerät personalisieren und aktivieren.

Der Artikel "Helder Gomes et al.: "Authentication Architecture for eHealth Professionals", 1. Januar 2007, ON THE MOVE TO MEANINGFUL INTERNET SYSTEMS, COOPIS, DOA, ODBASE, GADA, AND IS; [lecture notes in computer science], SPRINGER BERLIN HEIDELBERG, Seiten 1583-1600, XP019083306, ISBN: 9783540768357 beschreibt eine Architektur zur Authentifizierung von Fachkräften im Gesundheitswesen.

Der Artikel Dimitrios Lekkas et a.:" E-Passports as a Means Towards the First World-Wide Public Key Infrastructure", 28. Juni 2007 (2007-06-28), PUBLIC KEY INFRASTRUCTURE [lecture notes in computer science], SPRINGER BERLIN HEIDELBERG, Seiten 34-48, XP 019096046 beschreibt elektronische Ausweise als Mittel zur Etablierung einer ersten weltweiten Public-Key-Infrastruktur.

Ein Internet-Artikel Bender et al.: "Sicherheitsmechanismen für kontaktlose Chips im Deutschen elektronischen Personalausweis. Ein Überblick über Sicherheitsmerkmale, Risiken und Gegenmaßnahmen", 1. März 2008, XP 007912494 gibt einen Überblick über die Ziele und die Funktion der Sicherheitsmechanismen, wie sie voraussichtlich im Deutschen elektronischen Personalausweis zur Anwendung kommen.

Der Artikel von Christian Engel: "dem Weg zum elektronischen Personalausweis; der elektronische Personalausweis (ePA) als universelles Identifikationsdokument", Datenschutz und Datensicherheit, Viehweg Verlag, WI, LNKD-DOI:10.1007/S11623-006-0060-2, Bd. 30 Nummer 4, 1. April 2006, Seiten 207-210, XP019417321, beschreibt die Einsatzmöglichkeiten des neuen elektronischen Personalausweises als sicheres Identifikationsdokument.

Der Erfindung liegt demgegenüber die Aufgabe zugrunde, ein Verfahren zur Verfügungstellung eines Zertifikats zu schaffen sowie ein entsprechendes Computerprogrammprodukt, insbesondere ein digitales Speichermedium, und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Verfahren zur Verfügungstellung eines Zertifikats geschaffen, wobei in einem ersten Betriebsmodus eines ersten Computersystems die folgenden Schritte durchgeführt werden: Lesen eines in einem Dokument gespeicherten öffentlichen Schlüssels mit einem ersten Lesegerät des ersten Computersystems, Übertragung des öffentlichen Schlüssels von dem ersten Computersystem an ein zweites Computersystem, wobei das zweite Computersystem zur Generierung des Zertifikats ausgebildet ist, Empfang des Zertifikats
von dem zweiten Computersystem durch das erste Computersystem, Schreiben des Zertifikats auf das Dokument über das erste Lesegerät.

In einem zweiten Betriebsmodus des ersten Computersystems werden hingegen die folgenden Schritte durchgeführt: Eingabe eines Sperrmerkmals des Dokuments in das erste Computersystem, Übertragung des Sperrmerkmals von dem ersten Computersystem an das zweite Computersystem, wobei das zweite Computersystem Zugriff auf eine erste Datenbank hat, durch die das Sperrmerkmal dem öffentlichen Schlüssel des Dokuments zugeordnet wird, Zurverfügungstellung des Zertifikats zum Übertragen an ein drittes Computersystem unter der Bedingung einer erfolgreichen Authentifizierung gegenüber dem zweiten Computersystem mit Hilfe des Sperrmerkmals, Empfang des Zertifikats durch das dritte Computersystem, Schreiben des Zertifikats auf das Dokument über ein zweites Lesegerät des dritten Computersystems.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie z.B. einer Person, einer Organisation oder einem Computersystem, zuzuordnen. Beispielsweise kann das Zertifikat dem Standard X.509 oder einem anderen Standard entsprechen.

Unter einem "Dokument" wird hier jedes Dokument verstanden, welches einen Chip, d.h. eine integrierte elektronische Schaltung, beinhaltet, wobei das Dokument zum Beispiel Kunststoff- und/oder Papier-basiert sein kann. Insbesondere kann es sich bei dem Dokument um eine Chipkarte handeln. Bei dem Dokument kann es sich um ein Wert- oder Sicherheitsdokument, wie zum Beispiel um ein ID-Dokument, d.h. ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispiel eine Eintrittskarte, einen Frachtbrief, ein Visum oder dergleichen, handeln.

Das Dokument kann buchartig ausgebildet ist, wie dies zum Beispiel bei einem Reisepass der Fall ist. Das Dokument kann ein sogenanntes Funketikett tragen, welches auch als RFID-Tag oder RFID-Label bezeichnet wird.

Das Dokument kann einen elektronischen Speicher aufweisen, in dem Nutzerdaten und/oder ein öffentlicher Schlüssel und/oder ein Zertifikat gespeichert sein oder werden kann. Insbesondere kann das Dokument einen Prozessor beinhalten, beispielsweise zur Generierung einer elektronischen Signatur mit Hilfe des Zertifikats.

Unter einem Chip wird erfindungsgemäß auch eine integrierte elektronische Schaltung verstanden, die ganz oder teilweise drucktechnisch aufgebracht ist, wie z.B. mittels leitfähiger Tinte. Die Übertragung der Signale und Daten und ggf. auch der Stromversorgung des Dokuments können auf kontaktbehaftete als auch kontaktlose (berührungslose) Art mittels elektromagnetischer Wellen erfolgen.

Unter einem "Sperrmerkmal" des Dokuments wird ein Geheimnis, d.h. geheime Daten, verstanden, welches der berechtigte Nutzer des Dokuments und das zweite Computersystem teilen. Bei dem zweiten Computersystem kann es sich um das Computersystem eines sogenannten Zertifizierungsdienste-Anbieters (ZDA) handeln. Das Sperrmerkmal kann zum Beispiel von dem Nutzer des Dokuments anlässlich der Bestellung des Dokuments bei dem ZDA angegeben werden. Der ZDA speichert dieses Sperrmerkmal und ordnet das Sperrmerkmal dem Dokument des Nutzers zu. Für den Fall, dass eine Sperrung des Dokuments erforderlich ist, kann der Nutzer zum Beispiel telefonisch eine solche Sperrung veranlassen, indem er das Sperrmerkmal gegenüber dem ZDA angibt. Über das Sperrmerkmal authentifiziert sich der Nutzer gegenüber dem ZDA, da dem Nutzer das mit dem ZDA geteilte Geheimnis, nämlich das Sperrmerkmal, bekannt ist. Der ZDA kann daraufhin eine Sperrung des Dokuments vornehmen, indem beispielsweise das Zertifikat auf einem Online Certificate Status Protocol (OCSP) Server, d.h. einem sogenannten OSCP-Responder, auf den Status gesperrt ("revoked") gesetzt wird.

Ausführungsformen der Erfindung sind besonders vorteilhaft, da das Laden eines Zertifikats auf ein Dokument ermöglicht wird, und zwar auch dann, wenn das Dokument bei der Absendung der Anforderung für die Generierung des Zertifikats an das Computersystem eines ZDAs nicht vorliegt. Die Zurverfügungstellung des Zertifikats und das Laden des Zertifikats auf das Dokument erfolgt in einem ersten Betriebsmodus, wenn das Dokument bei der Absendung der Anforderung für das Zertifikat vorliegt, indem zunächst ein in dem Dokument gespeicherter öffentlicher Schlüssel mit einem ersten Lesegerät eines ersten Computersystems gelesen wird.

Beispielsweise begibt sich der Nutzer, d.h. ein Bürger, zu einer staatlichen Institution oder einer sonstigen autorisierten Institution, wie zum Beispiel einer Einwohnermeldestelle, die über das erste Computersystem mit dem ersten Lesegerät verfügt. Mit Hilfe des ersten Lesegeräts wird der öffentliche Schlüssel aus dem Dokument gelesen und von dem ersten Computersystem an das zweite Computersystem des ZDAs übertragen. Das zweite Computersystem generiert daraufhin für diesen öffentlichen Schlüssel ein Zertifikat. Das Zertifikat wird von dem zweiten Computersystem an das erste Computersystem gesendet und dann von dem ersten Computersystem über das erste Lesegerät in dem Dokument gespeichert.

Ein zweiter Betriebsmodus des ersten Computersystems wird beispielsweise eingenommen, wenn das Dokument nicht vorliegt, beispielsweise weil es der Bürger zu Hause vergessen hat. In diesem Fall wird so vorgegangen, dass anstelle des öffentlichen Schlüssels ein Sperrmerkmal des Dokuments in das erste Computersystem eingegeben wird. Dieses Sperrmerkmal wird dann von dem ersten Computersystem an das zweite Computersystem übertragen. Da es sich bei dem Sperrmerkmal um ein Geheimnis handelt, welches der Bürger und der ZDA miteinander teilen, kann der ZDA mit Hilfe des zweiten Computersystems, zum Beispiel aufgrund einer Zuordnungstabelle, den zu dem Dokument gehörenden öffentlichen Schlüssel ermitteln, ohne auf das Dokument zugreifen zu müssen.

Das Zertifikat wird dann von dem zweiten Computersystem generiert und zur Übertragung an ein drittes Computersystem zur Verfügung gestellt. Beispielsweise wird das Zertifikat von dem zweiten Computersystem zum Herunterladen über das Internet an das dritte Computersystem zur Verfügung gestellt. Bei dem dritten Computersystem kann es sich um einen üblichen Personalcomputer mit einem Internetbrowser handeln. Das dritte Computersystem kann sich beispielsweise in der Wohnung des Bürgers befinden. Nach dem Absenden der Anforderung für das Zertifikat von der Meldestelle kann der Bürger dann zuhause mit Hilfe seines dritten Computersystems das Zertifikat herunterladen und über ein an das dritte Computersystem angeschlossenes Lesegerät, das auch über eine Schreibfunktionalität verfügen kann, auf dem Dokument speichern.

Nach einer Ausführungsform der Erfindung werden zur Anforderung des Zertifikats Nutzerdaten des Nutzers des Dokuments, d.h. persönliche Angaben zu dem betreffenden Bürger, wie zum Beispiel den Namen, das Geburtsdatum, der Wohnort des Bürgers, von dem ersten Computersystem an das zweite Computersystem übertragen. Das zweite Computersystem verwendet diese Nutzerdaten zur Generierung des Zertifikats.

Nach einer Ausführungsform der Erfindung werden die Nutzerdaten von dem Dokument gelesen. Dies ist besonders vorteilhaft, wenn es sich bei dem Dokument um ein Ausweisdokument handelt, wie zum Beispiel einen elektronischen Personalausweis. Über das erste Lesegerät werden dann der öffentliche Schlüssel und die Nutzerdaten aus dem Dokument ausgelesen, um diese Daten für die Anforderung des Zertifikats von dem ersten Computersystem an das zweite Computersystem zu übertragen.

Alternativ oder zusätzlich kann auch eine Datenbank, auf die das erste Computersystem Zugriff hat, als Datenquelle für die Nutzerdaten verwendet werden. Beispielsweise sind in der Datenbank die Meldedatensätze eines Einwohnermelderegisters gespeichert. Mit Hilfe einer Datenbankabfrage werden durch das erste Computersystem diejenigen Nutzerdaten aus der Datenbank abgefragt, welche für die Anforderung des Zertifikats erforderlich sind.

Alternativ werden die Nutzerdaten anlässlich der Anforderung des Zertifikats erhoben, indem die Nutzerdaten beispielsweise über eine Tastatur des ersten Computersystems eingegeben werden. Die Nutzerdaten können durch das erste Computersystem in der Datenbank gespeichert werden. Die Nutzerdaten werden dann signiert und an den ZDA gesendet, der mit Hilfe der Nutzerdaten dann das Zertifikat erzeugt.

Nach einer Ausführungsform der Erfindung werden die Nutzerdaten in ein elektronisches Formular des ersten Computersystems automatisch eingetragen, nachdem sie aus einer Datenquelle, d.h. beispielsweise dem Dokument und/oder einer Datenbank, ausgelesen worden sind. Das Formular mit den eingetragenen Nutzerdaten wird dann mit einer Stifteingabevorrichtung von dem Bürger unterzeichnet. Bei der Stifteingabevorrichtung kann es sich um ein sogenanntes pen entry device handeln, wobei die Kopplung zwischen dem Eingabestift und dem Unterschriftspad zum Beispiel resistiv, kapazitiv oder elektromagnetisch erfolgen kann.

Das von dem Bürger mit Hilfe der Stifteingabevorrichtung unterzeichnete Formular wird dann zum Beispiel von einem Mitarbeiter der Meldestelle elektronisch signiert. Das elektronisch signierte Formular wird zur Anforderung des Zertifikats für das Dokument des Bürgers von dem ersten Computersystem an das zweite Computersystem übertragen. Zusammen mit dieser Anforderung oder in einem separaten Schritt kann in dem ersten Betriebsmodus der öffentliche Schlüssel des Dokuments und in dem zweiten Betriebsmodus das Sperrmerkmal des Dokuments von dem ersten Computersystem an das zweite Computersystem übertragen werden.

Nach einer Ausführungsform der Erfindung handelt es sich bei dem ersten Betriebsmodus um den Standard-Betriebsmodus, der initial von dem ersten Computersystem eingenommen wird. Wenn das erste Computerprogramm zur Anforderung des Zertifikats gestartet wird, so wird also zunächst immer der erste Betriebsmodus eingenommen. Der Übergang von dem ersten Betriebsmodus in den zweiten Betriebsmodus erfolgt automatisch dann, wenn eine Übergangsbedingung erfüllt wird. Je nach Ausführungsform kann die Übergangsbedingung dann erfüllt sein, wenn ein Lesezugriff zum Lesen des öffentlichen Schlüssels von dem Dokument nicht möglich ist, weil sich das Dokument außerhalb der Reichweite des Lesegeräts befindet. Die Übergangsbedingung kann so ausgebildet sein, dass der Übergang von dem ersten Betriebsmodus in den zweiten Betriebsmodus dann stattfindet, wenn eine vorgegebene Anzahl von Zugriffsversuchen des ersten Lesegeräts auf das Dokument zum Lesen des öffentlichen Schlüssels fehlgeschlagen ist und/oder wenn eine vorgegebene Zeitspanne verstrichen ist, ohne dass ein Zugriff von dem ersten Lesegerät auf das Dokument erfolgen konnte.

Beispielsweise wird von dem ersten Computersystem ein Signal generiert, um den Nutzer dazu aufzufordern, das Dokument in die Reichweite des Lesegeräts zu bringen, d.h. beispielsweise bei einer kontaktbehafteten Ausführungsform das Dokument in das Lesegerät einzuführen oder bei einer kontaktlosen Ausführungsform das Dokument in die Nähe des Lesegeräts zu bringen. Durch die Generierung dieses Signals wird ein Timer gestartet. Wenn der Timer die vorgegebene Zeitspanne erreicht, ohne dass ein Lesezugriff über das erste Lesegerät auf das Dokument möglich war, so wird automatisch in den zweiten Betriebsmodus übergegangen.

Nach einer Ausführungsform der Erfindung kann ein dritter Betriebsmodus gewählt werden. Der dritte Betriebsmodus ist dazu ausgebildet, ein weiteres Dokument mit einem Zertifikat zu bestellen. Dies ist besonders vorteilhaft, um dem Nutzer auf bequeme Art und Weise die Bestellung eines weiteren Dokuments zu ermöglichen. In dem dritten Betriebsmodus ist die Übertragung eines öffentlichen Schlüssels bzw. des Sperrmerkmals nicht erforderlich, sondern lediglich die Übertragung von Nutzerdaten, die für die Generierung des Zertifikats verwendet werden sollen.

Nach einer Ausführungsform der Erfindung verfügt das zweite Computersystem über einen Online Service Computer Interface (OSCI) Client zum Empfang der Anforderung für die Erstellung des Zertifikats bzw. die Produktion eines weiteren Dokuments von dem ersten Computersystem. Für die Übertragung der Anforderung von dem ersten Computersystem an das zweite Computersystem wird dann das OSCI-Transportprotokoll verwendet, d.h. die Übertragung der Anforderung von dem ersten Computersystem an das zweite Computersystem erfolgt in Form von ein oder mehreren OSCI-Nachrichten. Alternativ oder zusätzlich verfügt das zweite Computersystem über einen Webservice, der zum Empfang der Anforderung von dem ersten Computersystem ausgebildet ist. In diesem Fall kann die Übertragung der Anforderung von dem ersten Computersystem an das zweite Computersystem in Form eines sogenannten SOAP-Envelopes, d.h. als SOAP-Nachricht erfolgen.

Nach dem Empfang der Anforderung durch den OSCI-Client bzw. den Webservice des zweiten Computersystems wird die empfangene Anforderung geprüft, insbesondere auf das Vorhandensein von Computerviren oder anderen unzulässigen Daten, und entschlüsselt. Die Anforderung wird dann in einen Puffer geschrieben, auf den eine Komponente des zweiten Computersystems zugreifen kann, welche sich in einer Produktionsumgebung befindet. In der Produktionsumgebung wird das gewünschte Zertifikat generiert. Wenn der dritte Betriebsmodus gewählt worden ist, wird in der Produktionsumgebung auch ein Dokumentenrohling mit den Nutzerdaten personalisiert, um das gewünschte weitere Dokument herzustellen. In der Produktionsumgebung erfolgt dann auch das Speichern des Zertifikats in dem weiteren Dokument.

In einem weiteren Aspekt betrifft die Erfindung ein Computerprogrammprodukt, insbesondere ein digitales Speichermedium, mit von einem Computer ausführbaren Programminstruktionen zur Durchführung eines erfindungsgemäßen Verfahrens.

In einem weiteren Aspekt betrifft die Erfindung ein Computersystem mit Mitteln zur Selektion zumindest eines ersten oder eines zweiten Betriebsmodus, Mitteln zum Lesen eines in einem Dokument gespeicherten öffentlichen Schlüssels in dem ersten Betriebsmodus, Mitteln zur Übertragung des öffentlichen Schlüssels in dem ersten Betriebsmodus, Mitteln zum Empfang eines Zertifikats in dem ersten Betriebsmodus, Mitteln zum Schreiben des Zertifikats auf das Dokument in dem ersten Betriebsmodus, Mitteln zur Eingabe eines Sperrmerkmals (186) des Dokuments in dem zweiten Betriebsmodus, Mitteln zur Übertragung des Sperrmerkmals in dem zweiten Betriebsmodus.

Nach einer Ausführungsform der Erfindung beinhalten die Mittel zum Lesen einen Prozessor, der durch Instruktionen aus einem Programmspeicher gesteuert wird, um über das erste Lesegerät auf das Dokument zum Lesen des öffentlichen Schlüssels zuzugreifen.

Nach einer Ausführungsform der Erfindung beinhalten die Mittel zur Übertragung des öffentlichen Schlüssels einen Prozessor, der durch Instruktionen aus einem Programmspeicher gesteuert wird, um den öffentlichen Schlüssel an das zweite Computersystem zu übertragen. Insbesondere sind die Mittel zur Übertragung so ausgebildet, dass die Anforderung für das Zertifikat mit dem öffentlichen Schlüssel in Form von einer oder mehreren OSCI-Nachrichten oder SOAP-Nachrichten von dem ersten Computersystem gesendet wird. Wenn neben dem öffentlichen Schlüssel auch Nutzerdaten von dem ersten Computersystem an das zweite Computersystem übertragen werden sollen, so können die Mittel zur Übertragung so ausgebildet sein, dass die Übertragung der Nutzerdaten und die Übertragung des öffentlichen Schlüssels in derselben oder in getrennten Nachrichten erfolgt.

Nach einer Ausführungsform der Erfindung beinhalten die Mittel zum Empfang des Zertifikats und die Mittel zum Schreiben des Zertifikats einen Prozessor, der durch Instruktionen aus einem Programmspeicher gesteuert wird, um das Zertifikat zum Beispiel in Form einer OSCI-Nachricht oder in Form einer SOAP-Nachricht von dem zweiten Computersystem zu empfangen und anschließend das Zertifikat über das erste Lesegerät in das Dokument zu schreiben.

Nach einer Ausführungsform der Erfindung beinhalten die Mittel zur Eingabe eines Sperrmerkmals des Dokuments einen Prozessor, der durch Instruktionen aus einem Programmspeicher gesteuert wird, um die Eingabe eines Sperrmerkmals zu ermöglichen. Beispielsweise werden die Mittel zur Eingabe eines Sperrmerkmals durch eine Nutzer-Schnittstelle, insbesondere eine grafische Nutzer-Schnittstelle, gebildet, indem beispielsweise ein Eingabefenster generiert wird, in welches der Nutzer das Sperrmerkmal über eine Tastatur des ersten Computersystems eingeben kann.

Nach einer Ausführungsform der Erfindung beinhalten die Mittel zur Übertragung des Sperrmerkmals einen Prozessor, der durch Instruktionen aus einem Programmspeicher gesteuert wird, um das Sperrmerkmal beispielsweise in Form einer OSCI-Nachricht oder in Form einer SOAP-Nachricht an das zweite Computersystem zu übertragen. Wenn neben dem Sperrmerkmal zur Anforderung des Zertifikats Nutzerdaten an das zweite Computersystem übertragen werden sollen, so können die Mittel zur Übertragung so ausgebildet sein, dass die Nutzerdaten in derselben Nachricht wie das Sperrmerkmal oder einer oder mehreren gesonderten Nachrichten übertragen werden.

Nach einer Ausführungsform der Erfindung beinhalten die Mittel zur Selektion zumindest eines ersten oder eines zweiten Betriebsmodus einen Prozessor, der durch Instruktionen aus einem Programmspeicher gesteuert wird, um eine Selektion des Betriebsmodus durch einen Nutzer zu ermöglichen oder um eine solche Selektion automatisch vorzunehmen. Die Mittel zur Selektion können so ausgebildet sein, dass über eine Nutzer-Schnittstelle des ersten Computersystems eine Selektion des gewünschten Betriebsmodus eingegeben werden kann. Die Mittel zur Selektion können ferner so ausgebildet sein, dass der erste Betriebsmodus als Standard-Betriebsmodus vorgesehen ist, und dass von dem ersten Betriebsmodus in den zweiten Betriebsmodus automatisch übergegangen wird, wenn eine Übergangsbedingung erfüllt ist.

Nach Ausführungsformen der Erfindung beinhaltet das erste Computersystem einen einzigen Prozessor, der zur Ausführung verschiedener Instruktionen dient, um verschiedene Funktionalitäten, beispielsweise also die Mittel zur Selektion, die Mittel zum Lesen, die Mittel zur Übertragung, die Mittel zum Empfang des Zertifikats, die Mittel zum Schreiben des Zertifikats, die Mittel zur Eingabe eines Sperrmerkmals und die Mittel zur Übertragung des Sperrmerkmals zu realisieren. Das erste Computersystem kann aber auch mehrere Prozessoren beinhalten, die in derselben oder in verschiedenen Hardwareeinheiten angeordnet sind, um solche Funktionalitäten zu realisieren. Das erste Computersystem kann auch in einem Netzwerk betrieben werden, wobei ein Teil dieser Funktionalitäten über das Netzwerk zur Verfügung gestellt wird.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Computersystems,
- Figur 2: ein Flussdiagramm einer ersten Ausführungsform eines erfindungsgemäßen Verfahrens,
- Figur 3: ein UML-Diagramm einer Ausführungsform eines erfindungsgemäßen Verfahrens, wenn sich das Computersystem in einem ersten Betriebsmodus befindet,
- Figur 4: ein UML-Diagramm einer Ausführungsform eines erfindungsgemäßen Verfahrens, wenn sich das Computersystem in einem zweiten Betriebsmodus befindet,
- Figur 5: ein UML-Diagramm einer Ausführungsform eines erfindungsgemäßen Verfahrens, wenn sich das Computersystem in einem dritten Betriebsmodus befindet.

Elemente der nachfolgenden Ausführungsformen, die einander entsprechen, werden jeweils mit denselben Bezugszeichen gekennzeichnet.

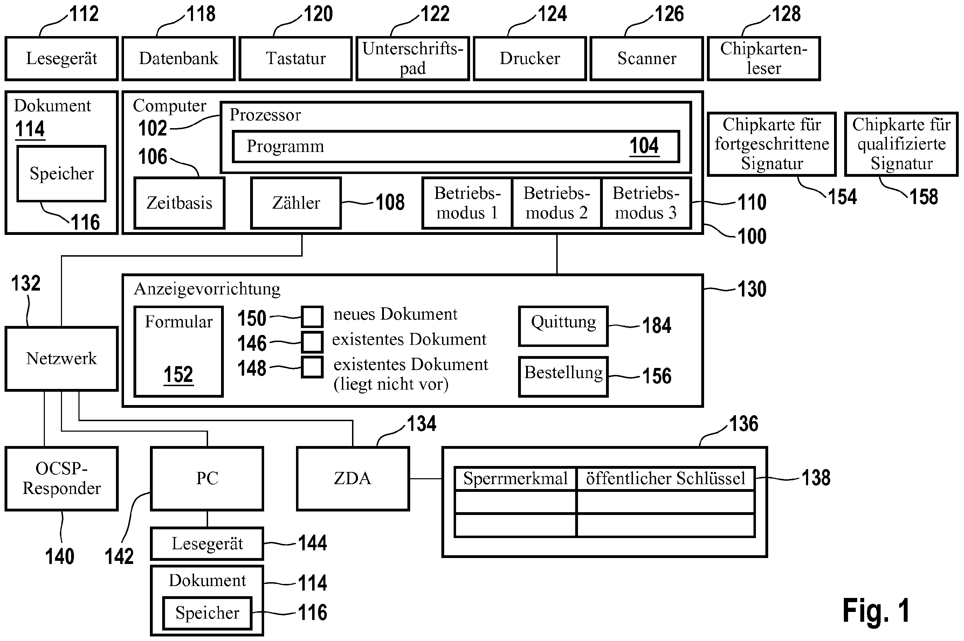

Die Figur 1 zeigt ein erstes Computersystem, welches einen Computer 100 aufweist. Bei dem Computer 100 kann es sich zum Beispiel um einen Personalcomputer einer Behörde, insbesondere einer Meldestelle, handeln. Der Computer 100 hat zumindest einen Prozessor 102 zur Ausführung eines Programms 104, welches von dem Prozessor 102 ausführbare Programminstruktionen beinhaltet. Der Computer 100 kann eine Zeitbasis 106 aufweisen, die zum Beispiel die aktuelle Uhrzeit liefert. Der Computer 100 kann ferner einen Zähler 108 aufweisen. Der Zähler 108 kann durch das Programm 104 realisiert werden.

Der Computer 100 hat ferner ein Statusregister 110, welches einen Statuswert beinhaltet, welcher den aktuellen Betriebsmodus des Computersystems 100 angibt, nämlich den Betriebsmodus 1, den Betriebsmodus 2 oder den Betriebsmodus 3.

An den Computer 100 ist ein Lesegerät 112 für ein Dokument 114 angeschlossen. Das Dokument 114 hat eine Schnittstelle zur Kommunikation mit dem Lesegerät 112. Hierbei kann es sich um eine kontaktbehaftete, eine kontaktlose, insbesondere eine RFID-Schnittstelle, oder eine Dual Mode Schnittstelle handeln.

Das Dokument 114 hat einen elektronischen Speicher 116. Der elektronische Speicher 116 hat einen geschützten Speicherbereich, in dem der geheime Schlüssel eines asymmetrischen kryptografischen Schlüsselpaars gespeichert ist. Ferner hat der Speicher 116 einen weiteren Speicherbereich, in dem der zu dem geheimen Schlüssel gehörende öffentliche Schlüssel des kryptografischen Schlüsselpaars gespeichert ist. Ferner ist der Speicher 116 dazu ausgebildet, dass über die Schnittstelle ein Zertifikat in den Speicher 116 geschrieben werden kann. In dem Speicher 116 können ferner Nutzerdaten gespeichert sein, wie zum Beispiel Name, Wohnort und Geburtsdatum des berechtigten Nutzers des Dokuments 114. Beispielsweise kann es sich bei dem Dokument 114 um ein Ausweisdokument handeln, wie zum Beispiel einen elektronischen Reisepass oder einen elektronischen Personalausweis.

Optional kann der Computer 100 auf eine Datenbank 118 zugreifen, in der die Meldedatensätze eines elektronischen Einwohnermelderegisters gespeichert sind. An den Computer 100 können ferner eine Tastatur 120, ein Unterschriftspad 122, eine Stifteingabevorrichtung, ein Drucker 124, ein Scanner 126, ein Chipkarten-Lesegerät 128 und eine Anzeigevorrichtung 130 angeschlossen sein.

Der Computer 100 ist über ein Netzwerk 132 mit dem Computer 134 eines ZDA verbunden. Bei dem Netzwerk 132 kann es sich um ein privates, ein öffentliches oder ein Virtual Private Network (VPN) handeln.

Der Computer 134 kann auf eine Datenbank 136 zugreifen. In der Datenbank 136 sind den Sperrmerkmalen verschiedener Dokumente vom Typ des Dokuments 114 jeweils ein öffentlicher Schlüssel zugeordnet, der in dem betreffenden Dokument gespeichert ist. Insbesondere ist also einem Sperrmerkmal des Dokuments 114 der in dem Dokument 114 gespeicherte öffentliche Schlüssel in der Datenbank 136 zugeordnet. Hierzu kann die Datenbank 136 eine entsprechende Zuordnungstabelle 138 beinhalten.

Der Computer 134 kann über das Netzwerk 132 mit dem OCSP-Responder 140 kommunizieren, um dort ein neu erzeugtes Zertifikat einzustellen oder den Status eines dort bereits vorhandenen Zertifikats zu aktualisieren.

Der Bürger kann von einem dritten Computersystem, beispielsweise einem Computer 142, welcher als Personalcomputer ausgebildet sein kann, über das Netzwerk 132 mit dem Computer 134 kommunizieren, um von dort ein von dem Computer 134 zur Verfügung gestelltes Zertifikat herunterzuladen. Der Computer 142 ist mit einem Lesegerät 144 verbunden, welches zumindest für einen Schreibzugriff auf den nicht geschützten Speicherbereich des Speichers 116 des Dokuments 114 ausgebildet ist, um das Zertifikat in den Speicher 116 schreiben zu können.

Das Programm 104 ist so ausgebildet, dass in dem Betriebsmodus 1 ein Zertifikat für das Dokument 114 von dem Computer 134 angefordert wird, und dass das Zertifikat von dem Programm 104 über das Lesegerät 112 in das Dokument 114 geschrieben wird.

Das Programm 104 ist ferner so ausgebildet, dass in dem Betriebsmodus 2 lediglich die Anforderung für das Zertifikat von dem Computer 100 an den Computer 134 übertragen wird. Da das Dokument 114 in dem Betriebsmodus 2 nicht zur Verfügung steht, um hieraus den öffentlichen Schlüssel auszulesen, wird anstelle des öffentlichen Schlüssels das Sperrmerkmal des Dokuments 114 an den Computer 134 übertragen. Das Laden des Zertifikats auf das Dokument 114 erfolgt dann zu einem späteren Zeitpunkt über den Computer 142.

Das Programm 104 ist ferner so ausgebildet, dass in dem Betriebsmodus 3 eine Anforderung für ein neu zu erstellendes Dokument an den Computer 134 gesendet wird. Die Übertragung des öffentlichen Schlüssels bzw. des Sperrmerkmals des Dokuments 114 erübrigt sich in diesem Fall, da für das neu zu erstellende Dokument ein weiteres kryptografisches Schlüsselpaar erzeugt werden muss.

Beispielsweise ist das Programm 104 so ausgebildet, dass die Wahl des Betriebsmodus manuell über eine grafische Nutzer-Schnittstelle durch den Nutzer erfolgt.

Beispielsweise beinhaltet die grafische Benutzer-Schnittstelle eine sogenannte Checkbox 146, die ein Benutzer selektieren kann, um den Betriebsmodus 1 auszuwählen. Die grafische Benutzer-Schnittstelle kann ferner Checkboxen 148 und 150 aufweisen, durch deren Selektion der Betriebsmodus 2 bzw. der Betriebsmodus 3 ausgewählt werden können.

Der Betriebsmodus 1 wird dann ausgewählt, wenn das Zertifikat für das Dokument 114 angefordert werden soll, und wenn das Dokument 114 vorliegt, sodass der öffentliche Schlüssel von dem Lesegerät 112 aus dem Dokument 114 gelesen werden kann. Der Betriebsmodus 2 wird dann ausgewählt, wenn das Zertifikat ebenfalls für das Dokument 114 angefordert werden soll, das Dokument 114 aber nicht vorliegt, beispielsweise weil es der Nutzer versäumt hat, das Dokument 114 mit zu der Meldestelle zu bringen. Der Betriebsmodus 3 wird dann ausgewählt, wenn der Nutzer ein neues Dokument bestellen möchte.

In dem Betriebsmodus 1 wird also beispielsweise wie folgt vorgegangen:
Das Programm 104 greift über das Lesegerät 112 auf das Dokument 114 zu, um aus dem Speicher 116 Nutzerdaten abzufragen. Alternativ oder zusätzlich greift das Programm 104 auf die Datenbank 118 zu, um die benötigten Nutzerdaten abzufragen. Die aus dem Dokument 114 und/oder aus der Datenbank 118 abgefragten Nutzerdaten werden automatisch in ein elektronisches Formular 152 von dem Programm 104 eingetragen und das elektronische Formular 152 wird auf der Anzeigevorrichtung 130 angezeigt. Alternativ oder zusätzlich können die Nutzerdaten auch über die Tastatur 120 in das elektronische Formular 152 manuell eingetragen werden.

Das elektronische Formular 152 mit den Nutzerdaten wird dann von dem Nutzer, d.h. dem berechtigten Inhaber des Dokuments 114, mit Hilfe der Stifteingabevorrichtung mittels des Unterschriftspads 122 unterzeichnet. Das unterzeichnete Formular 152 wird elektronisch signiert, indem das Programm 104 über das Chipkarten-Lesegerät 128 auf eine Chipkarte 154 zugreift. Bei der Chipkarte 154 kann es sich um eine Chipkarte für eine sogenannte fortgeschrittene Signatur handeln.

Durch Selektion des Bedienelements 156 der grafischen Nutzer-Schnittstelle wird dann das signierte elektronische Formular 152 von dem Computer 100 über das Netzwerk 132 an den Computer 134 gesendet. Der Computer 134 generiert daraufhin eine Anforderung an den Computer 100 für den öffentlichen Schlüssel des Dokuments 114, für das das Zertifikat generiert werden soll. Der Computer 100 greift daraufhin über das Lesegerät 112 auf das Dokument 114 zu, um den öffentlichen Schlüssel aus dem Speicher 116 zu lesen und über das Netzwerk 132 an den Computer 134 zu senden. Alternativ kann der öffentliche Schlüssel zusammen mit den Nutzerdaten aus dem Dokument 114 gelesen werden und zusammen mit den Nutzerdaten an den Computer 134 übertragen werden, sodass sich eine Nachfrage des Computers 134 zur Erlangung des öffentlichen Schlüssels erübrigen kann.

Der Computer 134 generiert dann das Zertifikat für das Dokument 114 und sendet das Zertifikat über das Netzwerk 132 an den Computer 100. Das Programm 104 schreibt dann das Zertifikat über das Lesegerät 112 in den Speicher 116 des Dokuments 114.

Für eine sogenannte qualifizierte elektronische Signatur ist es zusätzlich erforderlich, dass das Zertifikat in dem OCSP-Responder 140 freigeschaltet wird. Hierzu kann so vorgegangen werden, dass das Programm 104 über den Drucker 124 eine Quittung ausdruckt. Diese Quittung wird von dem rechtmäßigen Nutzer des Dokuments 114 eigenhändig unterschrieben. Die unterschriebene Quittung wird von dem Scanner 126 eingescannt. Das Programm 104 greift dann über den Chipkarten-Leser 128 auf eine Chipkarte 158 zu, um die eingescannte Quittung elektronisch zu signieren. Vorzugsweise handelt es sich bei der Chipkarte 158 um eine Chipkarte für eine qualifizierte Signatur. Beispielsweise gehört die Chipkarte 158 einem Beamten der Meldestelle, der durch seine qualifizierte Signatur die Echtheit der Quittung beglaubigt. Die signierte Quittung wird dann von dem Programm 104 über das Netzwerk 132 an den Computer 134 gesendet. Der Computer 134 speichert das Zertifikat in dem OCSP-Responder 140 ab und setzt dessen Status auf "good", d.h. das Zertifikat ist nicht gesperrt.

Wenn der Betriebsmodus 2 gewählt wird, so können die Nutzerdaten nicht aus dem Dokument 114 gelesen werden, da dieses ja nicht vorliegt, sondern nur aus der Datenbank 118. Alternativ oder zusätzlich erfolgt die Eingabe der Nutzerdaten über die Tastatur 120. Im Unterschied zu dem Betriebsmodus 1 kann ferner der öffentliche Schlüssel nicht aus dem Dokument 114 gelesen werden. Anstelle dessen wird über die Tastatur 120 von dem Nutzer ein Sperrmerkmal des Dokuments 114 in den Computer 100 eingegeben. Dieses Sperrmerkmal wird anstelle des öffentlichen Schlüssels über das Netzwerk 132 an den Computer 134 übertragen. Der Computer 134 greift mit Hilfe des Sperrmerkmals als Zugriffsschlüssel auf die Zuordnungstabelle 138 zu, um von dort den öffentlichen Schlüssel, der in dem Dokument 114 gespeichert ist, zu lesen.

Im Unterschied zu dem Betriebsmodus 1 wird das Zertifikat von dem Computer 134 nicht an den Computer 100 gesendet, sondern zur Übertragung an den Computer 142 zur Verfügung gestellt. Beispielsweise wird das Zertifikat von dem Computer 134 hierzu im Internet zum Herunterladen bereitgestellt. Zum Zugriff auf das Zertifikat muss sich der Nutzer gegenüber dem Computer 134 mit Hilfe des Sperrmerkmals authentifizieren, indem beispielsweise das Sperrmerkmal in den Computer 142 eingegeben und über das Internet an den Computer 134 übertragen wird. Der Computer 134 überträgt dann das Zertifikat an den Computer 142, der das Zertifikat über das Lesegerät 144 in den Speicher 116 des Dokuments 114 schreibt. Der Computer 134 speichert dann das Zertifikat ebenfalls in dem OCSP-Responder 140 und setzt den Status des Zertifikats auf "good".

In dem Betriebsmodus 3 wird im Unterschied zu den Betriebsmodi 1 und 2 ein neues Dokument erstellt. Es erübrigt sich damit also die Übertragung des öffentlichen Schlüssels bzw. des Sperrmerkmals.

Nach einer Ausführungsform der Erfindung handelt es sich bei dem Betriebsmodus 1 um den Standard-Betriebsmodus. Wenn das Programm 104 versucht über das Lesegerät 112 auf das Dokument 114 zuzugreifen, um die Nutzerdaten und/oder den öffentlichen Schlüssel aus dem Dokument 114 auszulesen, und wenn ein solcher Zugriff nicht möglich ist, so wird automatisch in den Betriebsmodus 2 gewechselt, wenn eine vordefinierte Übergangsbedingung erfüllt ist. Die Übergangsbedingung kann so definiert sein, dass nach dem ersten Zugriffsversuch eine bestimmte vorgegebene Zeitspanne vergangen ist, ohne dass ein Zugriff möglich war, d.h. es liegt ein sogenannter "Time-out" vor, der mit Hilfe der Zeitbasis 106 ermittelt wird. Alternativ oder zusätzlich kann die Übergangsbedingung eine maximale Anzahl von Zugriffsversuchen auf das Dokument 114 spezifizieren. Das Vorliegen dieser Übergangsbedingung wird durch das Programm 104 mit Hilfe des Zählers 108 geprüft, wobei der Zähler 108 mit jedem Zugriffsversuch inkrementiert wird.

Zur Freischaltung des Zertifikats kann es erforderlich sein, dass der Inhaber des Dokuments 114 eine Quittung eigenhändig unterzeichnet. Durch die Quittung quittiert der Inhaber des Dokuments 114, dass er in Besitz des Dokuments 114 ist und das Zertifikat empfangen hat (Betriebsmodus 1) oder auf das Dokument laden wird (Betriebsmodus 2). In dem Betriebsmodus 3 wird durch die Quittung bestätigt, dass das neue Dokument ausgehändigt worden ist.

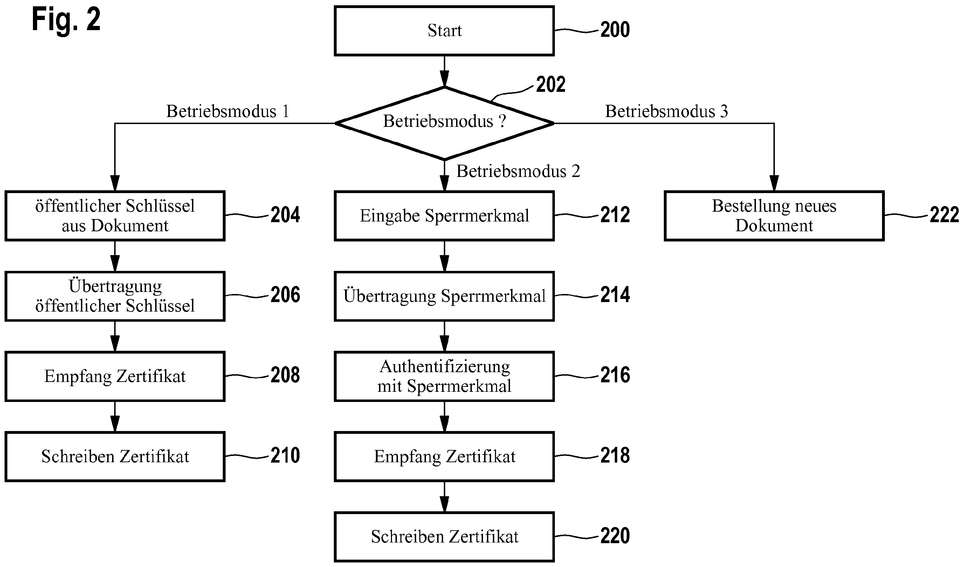

Die Figur 2 zeigt ein entsprechendes Flussdiagramm. In dem Schritt 200 wird der Programmablauf des Programms 104 gestartet. Daraufhin wird in dem Schritt 202 geprüft, welcher Betriebsmodus vorliegt. Die Wahl des Betriebsmodus kann dabei manuell oder automatisch erfolgen.

In dem Betriebsmodus 1 wird in dem Schritt 204 ein öffentlicher Schlüssel aus dem Dokument gelesen, für welches das Zertifikat angefordert werden soll. In dem Schritt 206 wird der öffentliche Schlüssel von dem ersten Computer an den zweiten Computer übertragen. Der zweite Computer generiert dann für diesen öffentlichen Schlüssel ein Zertifikat und sendet das Zertifikat an den ersten Computer zurück. Der erste Computer empfängt das Zertifikat in dem Schritt 208 und schreibt das Zertifikat in dem Schritt 210 über das Lesegerät in das Dokument.

In dem Betriebsmodus 2 wird hingegen in dem Schritt 212 das dem Dokument zugeordnete Sperrmerkmal in den ersten Computer eingegeben. Der erste Computer überträgt dieses Sperrmerkmal in dem Schritt 214 an den zweiten Computer. Der zweite Computer generiert daraufhin das Zertifikat und stellt das Zertifikat zur Übertragung an einen dritten Computer zur Verfügung. In dem Schritt 216 authentifiziert sich der Nutzer von dem dritten Computer aus gegenüber dem zweiten Computer mit Hilfe des Sperrmerkmals, sodass das Zertifikat von dem zweiten Computer an den dritten Computer übertragen und dort in dem Schritt 218 empfangen wird. In dem Schritt 220 wird dann das Zertifikat von dem dritten Computer in das Dokument geschrieben.

Wenn der Betriebsmodus 3 vorliegt, wird hingegen in dem Schritt 222 eine Bestellung für ein neues Dokument von dem ersten Computer generiert und an den zweiten Computer gesendet.

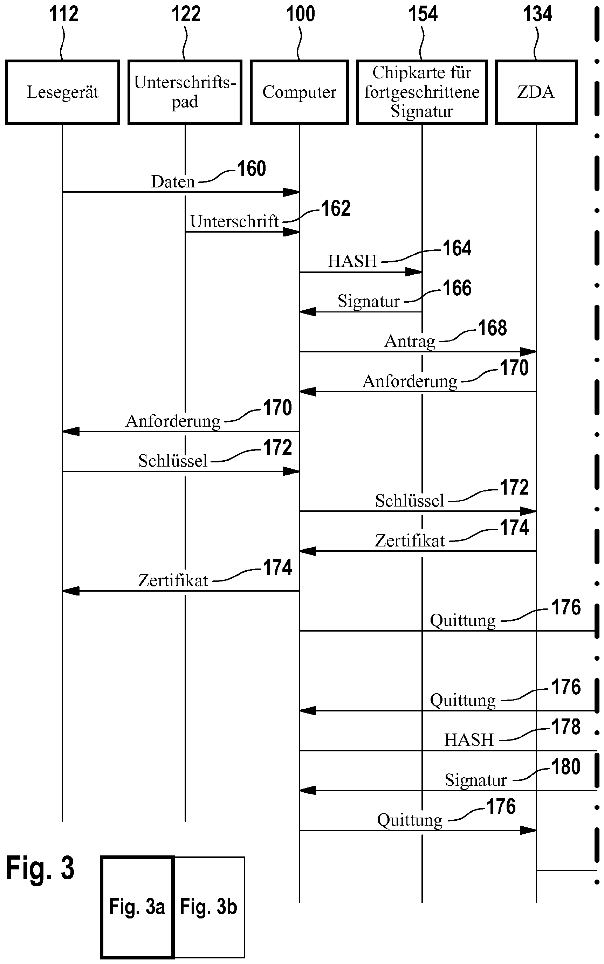

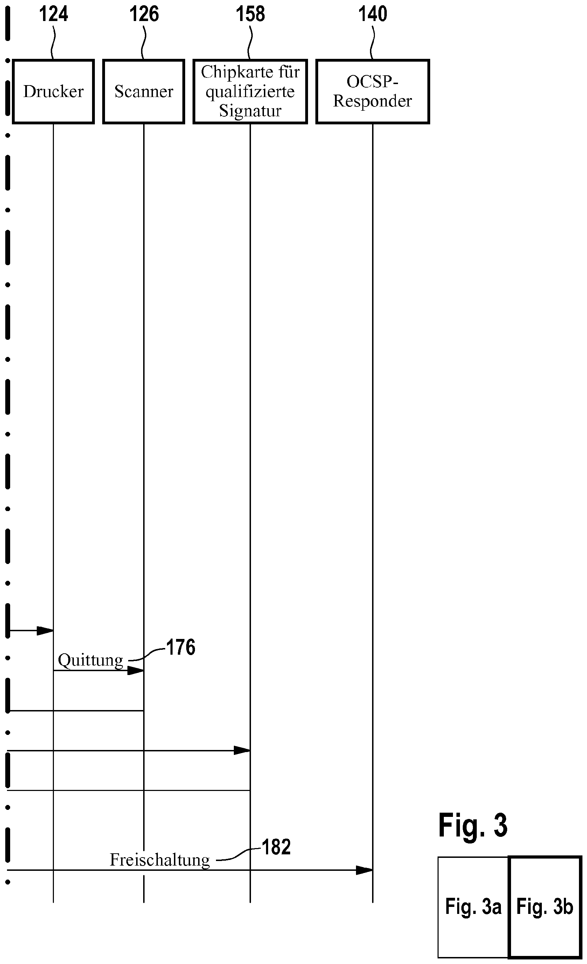

Die Figur 3 zeigte eine Ausführungsform eines erfindungsgemäßen Verfahrens anhand eines UML-Diagramms, und zwar in dem Betriebsmodus 1. Zur Anforderung eines Zertifikats für das Dokument 114 (vgl. Figur 1) wird beispielsweise wie folgt vorgegangen:
Der Computer 100 liest über das Lesegerät 112 aus dem Dokument 114 Daten 160 aus, wobei es sich bei den Daten 160 um Nutzerdaten des Inhabers des Dokuments 114 handelt, wie zum Beispiel persönliche Angaben zu Namen und Wohnort. Die Daten 160 werden von dem Lesegerät 112 an den Computer 100 übertragen und dort in das elektronische Formular 152 automatisch eingetragen. Das elektronische Formular wird dann über das Unterschriftspad 122 mit einem Eingabestift von dem Inhaber des Dokuments 114 unterschrieben. Die über das Unterschriftspad 122 eingegebene, digitalisierte Unterschrift 126 kann in dem elektronischen Formular 152 auf der Anzeigevorrichtung 130 auf einer in dem Formular 152 beinhalteten Unterschriftszeile angezeigt werden.

Das elektronische Formular 152 mit den Daten 160 und der Unterschrift 162 wird dann digital signiert, beispielsweise indem der Computer 100 einen HASH-Wert aus dem elektronischen Formular 152, den Daten 160 und der Unterschrift 162 generiert und diesen HASH-Wert 164 an die Chipkarte 154 eines Mitarbeiters der Meldebehörde übergibt, die daraufhin die Signatur 166 generiert. Das mit der Signatur 166 versehene elektronische Formular 152 wird als Antrag 168 von dem Computer 100 an den Computer 134 gesendet. Dies kann beispielsweise in Form einer OSCI-Nachricht oder in Form einer SOAP-Nachricht erfolgen.

Der Computer 134 antwortet auf den Antrag 168 mit einer Anforderung 170, da der Computer 134 den öffentlichen Schlüssel des Dokuments 114 benötigt, um das Zertifikat generieren zu können. Diese Anforderung 170 wird von dem Computer 100 über das Lesegerät 112 an das Dokument 114 gerichtet, um von dort den öffentlichen Schlüssel 172 auszulesen. Der Computer 100 überträgt dann den öffentlichen Schlüssel 172 an den Computer 134, der daraufhin das gewünschte Zertifikat 174 generiert.

Alternativ kann der Schlüssel 172 auch zusammen mit den Daten 160 aus dem Dokument 114 ausgelesen werden und als Teil des Antrags 168 an den Computer 134 übertragen werden. In diesem Fall erübrigt sich die Anforderung 170.

Alternativ oder zusätzlich zum Auslesen der Daten 160 aus dem Dokument 114 können diese auch aus der Datenbank 118 ausgelesen werden.

Vorzugsweise ist das Zertifikat 174 signaturgesetzkonform, sodass es zur Generierung einer sogenannten qualifizierten elektronischen Signatur verwendet werden kann. Das Zertifikat 174 beinhaltet dann die Daten 160 zur Identifizierung des Nutzers des Dokuments 114, dem das Zertifikat 174 zugeordnet ist. Der Computer 100 speichert das Zertifikat 174 über das Lesegerät 112 in dem Dokument 114 ab.

Zur Freischaltung des Zertifikats wird dann wie folgt vorgegangen: Der Computer 100 generiert eine Quittung 176 zur Quittierung des Erhalts des Zertifikats 174 durch den Nutzer des Dokuments 114. Die Quittung 176 wird über den Drucker 134 ausgedruckt und dann von dem Nutzer des Dokuments 114 eigenhändig unterschrieben.

Die unterschriebene Quittung 176 wird dann mit Hilfe des Scanners 126 eingescannt. Die eingescannte Quittung 176 wird elektronisch signiert, beispielsweise indem der Computer 100 einen HASH-Wert 178 für die Quittung 176 generiert und diesen an die Chipkarte 158 sendet, die daraufhin eine Signatur 180 generiert. Die Chipkarte 158 kann zum Beispiel einem Mitarbeiter der Meldestelle zugeordnet sein, der mit seiner Signatur die Echtheit der Quittung 176 beglaubigt. Die digital signierte Quittung 178 wird von dem Computer 100 an den Computer 134 gesendet, beispielsweise wiederum in Form einer OSCI-Nachricht oder in Form einer SOAP-Nachricht. Der Computer 134 sendet daraufhin ein Signal 182 zur Freischaltung des Zertifikats 174 an den OCSP-Responder 140.

Zur Generierung der Quittung wird beispielsweise so vorgegangen, dass der Mitarbeiter der Meldestelle das Bedienelement 184 der grafischen Nutzer-Schnittstelle selektiert, sodass daraufhin ein Quittungsformular über den Drucker 124 ausgedruckt wird. Der Inhaber des Dokuments 114 unterzeichnet daraufhin das Quittungsformular eigenhändig. Das unterzeichnete Quittungsformular wird dann mit Hilfe des Scanners 126 eingescannt und mit Hilfe der Chipkarte 158 elektronisch signiert. Die elektronisch signierte Quittung wird von dem Computer 100 über das Netzwerk 132 an den Computer 134 gesendet, welcher daraufhin ein Freischaltsignal an den OCSP-Responder 140 sendet, um das Zertifikat freizuschalten.

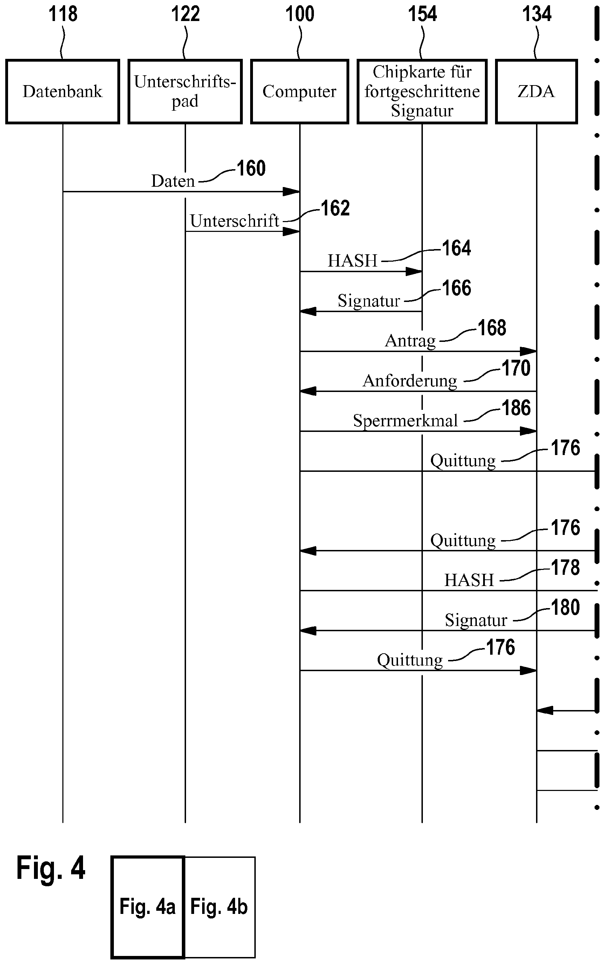

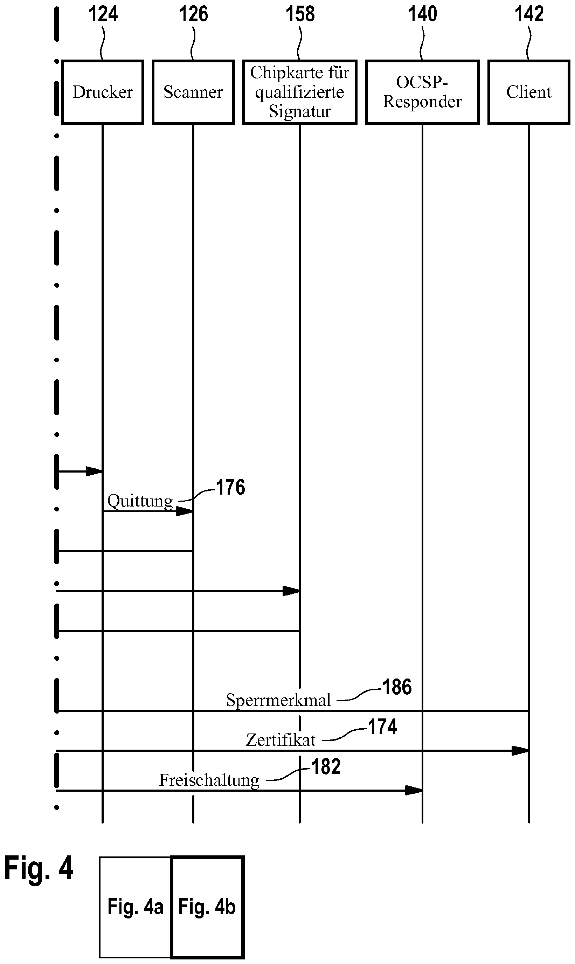

Die Figur 4 zeigt eine Ausführungsform eines erfindungsgemäßen Verfahrens in dem Betriebsmodus 2. Der Betriebsmodus 2 unterscheidet sich von dem Betriebsmodus 1 dadurch, dass das Dokument 114 zwar auch bereits existent ist, aber nicht zum Lesen über das Lesegerät 112 zur Verfügung steht. Bei dieser Ausführungsform werden die Daten 160 daher aus der Datenbank 118 ausgelesen oder - wenn auch dies nicht möglich sein sollte - über die Tastatur 120 (vgl. Figur 1) manuell eingegeben.

Die Daten 160 werden wiederum in das elektronische Formular 152 eingegeben, welches mit der Unterschrift 162 versehen und anschließend elektronisch signiert wird. Der resultierende Antrag 168 wird von dem Computer 100 an den Computer 134 gesendet, der auf den Antrag 168 mit der Anforderung 170 für ein Sperrmerkmal 186 des Dokuments 114 antwortet.

Der Inhaber des Dokuments 114 wird dann beispielsweise über die Nutzer-Schnittstelle des Computers 100 dazu aufgefordert, das Sperrmerkmal 186 einzugeben. Dies kann beispielsweise über die Tastatur 120 erfolgen. Das Sperrmerkmal 186 wird von dem Computer 100 an den Computer 134 übertragen, der mit Hilfe des Sperrmerkmals den öffentlichen Schlüssel des Dokuments 114 ermittelt, indem er hierzu auf die Datenbank 136 (vgl. Figur 1) zugreift. Für diesen öffentlichen Schlüssel generiert der Computer 134 dann das Zertifikat und stellt dieses Zertifikat zum Herunterladen über das Netzwerk 132 zur Verfügung.

Ferner wird wiederum die Quittung 176 generiert, unterzeichnet, elektronisch signiert und von dem Computer 100 an den Computer 134 übertragen.

Das Sperrmerkmal 186 kann auch zusammen mit den Daten 160 in das elektronische Formular 152 eingegeben werden, sodass sich die Anforderung 170 erübrigt. Ferner kann auch die Quittung 176 bereits Bestandteil des Formulars 152 sein.

Zum Herunterladen des Zertifikats von dem Computer 134 kann wie folgt vorgegangen werden: Der Nutzer des Dokuments 114 konnektiert seinen Computer 142 über das Netzwerk 132 mit dem Computer 134, um das Zertifikat herunterzuladen. Hierzu authentisiert sich der Träger des Dokuments 114 gegenüber dem Computer 134 mit Hilfe des Sperrmerkmals 186, woraufhin das Zertifikat 174 an den Computer 142 übertragen wird, welcher das Zertifikat dann, zum Beispiel über das Lesegerät 144, in das Dokument 114 schreibt (vgl. Figur 1). Der Computer 134 generiert das Signal 182 und sendet dieses an den OCSP-Responder 140, um das Zertifikat freizuschalten.

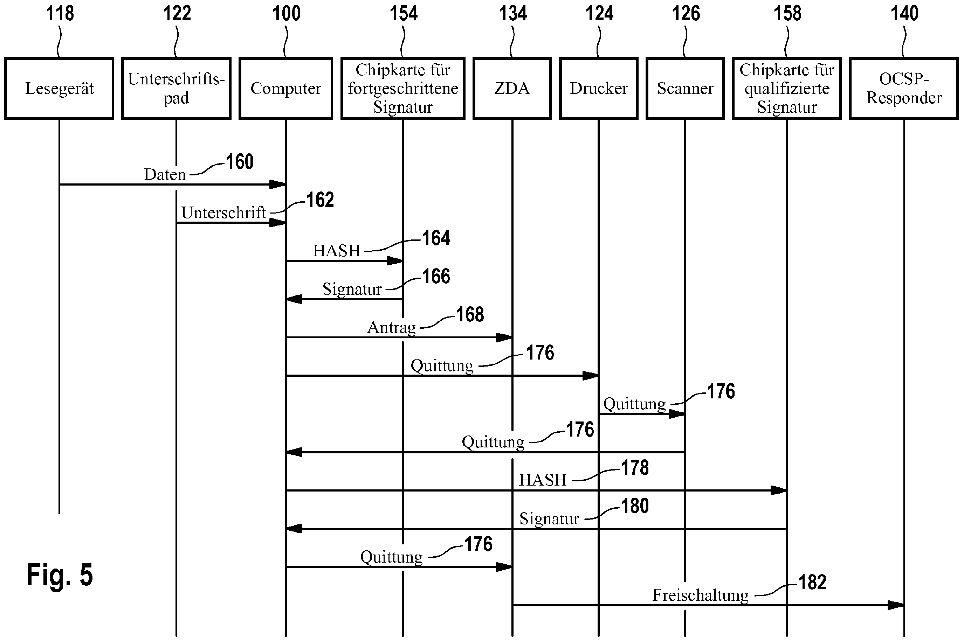

Die Figur 5 zeigt eine Ausführungsform eines erfindungsgemäßen Verfahrens für den Betriebsmodus 3. In diesem Betriebsmodus 3 geht es darum, ein neues Dokument zu bestellen, wobei das Dokument 114 nicht zwingend vorliegen muss. Im Weiteren wird aber ohne Beschränkung der Allgemeinheit davon ausgegangen, dass das Dokument 114 vorliegt, um die Daten 160 daraus auszulesen. Alternativ oder zusätzlich können die Daten 160 aus der Datenbank 118 abgefragt oder über die Tastatur 120 eingegeben werden. Das Formular 152 mit den Daten 160 wird mit der Unterschrift 162 versehen und anschließend mit Hilfe der Chipkarte 154 elektronisch signiert. Der signierte Antrag 168 wird von dem Computer 100 an den Computer 134 gesendet, beispielsweise in Form einer OSCI-Nachricht oder in Form einer SOAP-Nachricht.

Der Computer 134 generiert daraufhin ein asymmetrisches kryptografisches Schlüsselpaar und ein Zertifikat. Ferner wird ein Dokumenten-Rohling mit dem geheimen Schlüssel des kryptografischen Schlüsselpaars personalisiert und der öffentliche Schlüssel und das Zertifikat werden in dem Dokument gespeichert. Dieses Dokument wird dann an die Meldestelle geliefert und an den Bürger ausgehändigt. Der Bürger bestätigt den Empfang des Dokuments durch Unterzeichnung der Quittung 176, die nach elektronischer Signierung von dem Computer 100 an den Computer 134 gesendet wird. Nachdem der Computer 134 die Quittung 176 erhalten hat, generiert er das Signal 182, welches an den OCSP-Responder 140 zur Freischaltung des Zertifikats übertragen wird.

### Bezugszeichenliste

- 100: Computer
- 102: Prozessor
- 104: Programm
- 106: Zeitbasis
- 108: Zähler
- 110: Statusregister
- 112: Lesegerät
- 114: Dokument
- 116: Speicher
- 118: Datenbank
- 120: Tastatur
- 122: Unterschriftspad
- 124: Drucker
- 126: Scanner
- 128: Chipkarten-Leser
- 130: Anzeigevorrichtung
- 132: Netzwerk
- 134: Computer
- 136: Datenbank
- 138: Zuordnungstabelle
- 140: OCSP-Responder
- 142: Computer
- 144: Lesegerät
- 146: Checkbox
- 148: Checkbox
- 150: Checkbox
- 152: elektronisches Formular
- 154: Chipkarte
- 156: Bedienelement
- 158: Chipkarte
- 160: Daten
- 162: Unterschrift
- 164: HASH-Wert
- 166: Signatur
- 168: Antrag
- 170: Anforderung
- 172: Schlüssel
- 174: Zertifikat
- 176: Quittung
- 178: HASH-Wert
- 180: Signatur
- 182: Signal
- 184: Bedienelement
- 186: Sperrmerkmal

## Patentansprüche

1. Verfahren zur Verfügungstellung eines Zertifikats (174), wobei in einem ersten Betriebsmodus eines ersten Computersystems (100), der als Standard-Betriebsmodus definiert ist, die folgenden Schritte durchgeführt werden:
a) Lesen eines in einem Dokument (114) gespeicherten öffentlichen Schlüssels (172) mit einem ersten Lesegerät (112) des ersten Computersystems,
b) Übertragung des öffentlichen Schlüssels (172) von dem ersten Computersystem an ein zweites Computersystem (134), wobei das zweite Computersystem zur Generierung des Zertifikats ausgebildet ist,
c) Empfang des Zertifikats von dem zweiten Computersystem durch das erste Computersystem,
d) Schreiben des Zertifikats auf das Dokument über das erste Lesegerät,
wobei das Verfahren eine automatische Selektion eines zweiten Betriebsmodus, wenn das Lesen des öffentlichen Schlüssels von dem Dokument über das erste Lesegerät nicht möglich ist, umfasst;
wobei in dem zweiten Betriebsmodus des ersten Computersystems anstelle der Schritte a) bis d) die folgenden Schritte durchgeführt werden:
e) Eingabe eines Sperrmerkmals (186) des Dokuments in das erste Computersystem,
f) Übertragung des Sperrmerkmals von dem ersten Computersystem an das zweite Computersystem, wobei das zweite Computersystem Zugriff auf eine erste Datenbank (136) hat, durch die das Sperrmerkmal dem öffentlichen Schlüssel des Dokuments zugeordnet wird,
g) Zurverfügungstellung des Zertifikats zum Übertragen an ein drittes Computersystem (142) unter der Bedingung einer erfolgreichen Authentifizierung gegenüber dem zweiten Computersystem mit Hilfe des Sperrmerkmals,
h) Empfang des Zertifikats durch das dritte Computersystem,
i) Schreiben des Zertifikats auf das Dokument über ein zweites Lesegerät (144) des dritten Computersystems.

2. Verfahren nach Anspruch 1, wobei Nutzerdaten (160) eines Nutzers des Dokuments von dem ersten Computersystem an das zweite Computersystem übertragen werden, wobei die Nutzerdaten von dem ersten Computersystem aus einer Datenquelle ausgelesen werden.

3. Verfahren nach Anspruch 2, wobei es sich bei der Datenquelle um das Dokument (114) und/oder eine zweite Datenbank (118) handelt.

4. Verfahren nach Anspruch 2 oder 3, wobei die Nutzerdaten in ein elektronisches Formular (152) eingetragen werden, wobei das Formular mit Hilfe einer Stifteingabevorrichtung (122) unterzeichnet wird, wobei das unterzeichnete Formular elektronisch signiert wird und von dem ersten Computersystem an das zweite Computersystem übertragen wird.

5. Verfahren nach einem der vorhergehenden Ansprüche, wobei es sich bei dem ersten Betriebsmodus um einen Standard-Betriebsmodus handelt, und wobei durch das erste Computersystem automatisch der zweite Betriebsmodus gewählt wird, wenn das Lesen des öffentlichen Schlüssels von dem Dokument nicht möglich ist, wobei insbesondere der zweite Betriebsmodus von dem ersten Computersystem gewählt wird, wenn das Lesen des öffentlichen Schlüssels von dem Dokument nicht möglich ist, weil sich das Dokument außerhalb der Reichweite des ersten Lesegeräts (112) befindet.

6. Verfahren nach Anspruch 5, wobei der zweite Betriebsmodus von dem ersten Computersystem gewählt wird, wenn das Lesen des öffentlichen Schlüssels von dem Dokument nicht möglich ist, nachdem eine vorgegebene Anzahl von Zugriffsversuchen des ersten Computersystems über das erste Lesegerät auf das Dokument fehlgeschlagen ist.

7. Verfahren nach Anspruch 5 oder 6, wobei der zweite Betriebsmodus von dem ersten Computersystem gewählt wird, wenn das Lesen des öffentlichen Schlüssels von dem Dokument nicht möglich ist, nachdem eine vorgegebene Zeitspanne verstrichen ist, ohne dass das Dokument in die Reichweite des ersten Lesegeräts gebracht worden ist.

8. Verfahren nach einem der vorhergehenden Ansprüche, wobei ein dritter Betriebsmodus des ersten Computersystems gewählt wird, um an das zweite Computersystem eine Bestellung (168) eines weiteren Dokuments zu übertragen.

9. Verfahren nach einem der vorhergehenden Ansprüche, wobei Nutzerdaten (160) eines Nutzers des Dokuments von dem ersten Computersystem an das zweite Computersystem übertragen werden, wobei die Nutzerdaten zunächst erhoben werden, indem die Nutzerdaten manuell in das erste Computersystem eingegeben werden, und wobei die Nutzerdaten signiert an das zweite Computersystem übertragen werden.

10. Computerprogrammprodukt, insbesondere digitales Speichermedium, mit von einem Computersystem ausführbaren Programminstruktionen (104) zur Durchführung eines Verfahrens nach einem der vorhergehenden Patentansprüche.

11. Computersystem mit
- Mitteln (104; 146, 148, 150) zur Selektion zumindest eines ersten oder eines zweiten Betriebsmodus,
- Mitteln (104, 112) zum Lesen eines in einem Dokument (114) gespeicherten öffentlichen Schlüssels (172) in dem ersten Betriebsmodus,
- Mitteln (104) zur Übertragung des öffentlichen Schlüssels in dem ersten Betriebsmodus,
- Mitteln (104) zum Empfang eines Zertifikats in dem ersten Betriebsmodus,
- Mitteln (104, 112) zum Schreiben des Zertifikats auf das Dokument in dem ersten Betriebsmodus,
- Mitteln (104, 120) zur Eingabe eines Sperrmerkmals (186) des Dokuments in dem zweiten Betriebsmodus,
- Mitteln (104) zur Übertragung des Sperrmerkmals in dem zweiten Betriebsmodus,
wobei die Mittel zur Selektion so ausgebildet sind, dass der erste Betriebsmodus als Standard-Betriebsmodus definiert ist, wobei der zweite Betriebsmodus automatisch selektiert wird, wenn das Lesen des öffentlichen Schlüssels von dem Dokument über das erste Lesegerät nicht möglich ist.

12. Computersystem nach Anspruch 11, wobei die Mittel zur Selektion so ausgebildet sind, dass ein dritter Betriebsmodus auswählbar ist, und mit Mitteln (104) zum Senden einer Bestellung (168) für ein weiteres Dokument.

13. Computersystem nach Anspruch 11 oder 12, wobei die Mittel zur Selektion so ausgebildet sind, dass die Selektion über eine Nutzer-Schnittstelle erfolgt.

14. Computersystem nach einem der vorhergehenden Ansprüche 11 bis 13, mit Mitteln zum Auslesen von Nutzerdaten (160) aus einer Datenquelle und Mitteln (104) zur Übertragung der Nutzerdaten, wobei es sich bei der Datenquelle insbesondere um das Dokument und/oder eine zweite Datenbank (118) handelt.

## Claims

1. A method for providing a certificate (174), wherein, in a first operating mode of a first computer system (100), which is defined as a standard operating mode, the following steps are carried out:
a) a public key (172) stored in a document (114) is read by a first reader (112) of the first computer system,
b) the public key (172) is transferred from the first computer system to a second computer system (134), wherein the second computer system is designed to generate the certificate,
c) the certificate is received from the second computer system by the first computer system,
d) the certificate is written to the document via the first reader,
wherein the method comprises an automatic selection of a second operating mode when it is not possible for the public key to be read from the document via the first reader;
wherein, in the second operating mode of the first computer system, the following steps are carried out instead of steps a) to d):
e) a locking feature (186) of the document is entered into the first computer system,
f) the locking feature is transmitted from the first computer system to the second computer system, wherein the second computer system has access to a first database (136) by which the locking feature is allocated to the public key of the document,
g) the certificate is made available for transmission to a third computer system (142) under the condition of a successful authentication to the second computer system with the aid of the locking feature,
h) the certificate is received by the third computer system,
i) the certificate is written to the document via a second reader (144) of the third computer system.

2. The method according to claim 1, wherein user data (160) of a user of the document are transmitted from the first computer system to the second computer system, wherein the user data are read from a data source by the first computer system.

3. The method according to claim 2, wherein the data source is the document (114) and/or a second database (118).

4. The method according to claim 2 or 3, wherein the user data are entered into an electronic form (152), wherein the form is signed with the aid of a pen input device (122), wherein the signed form is signed electronically and is transmitted from the first computer system to the second computer system.

5. The method according to any one of the preceding claims, wherein the first operating mode is a standard operating mode, and wherein the second operating mode is selected automatically by the first computer system when it is not possible for the public key to be read from the document, wherein in particular the second operating mode is selected by the first computer system when it is not possible for the public key to be read from the document because the document is outside the range of the first reader (112).

6. The method according to claim 5, wherein the second operating mode is selected by the first computer system when it is not possible for the public key to be read from the document once a predefined number of attempts by the first computer system to access the document via the first reader have failed.

7. The method according to claim 5 or 6, wherein the second operating mode is selected by the first computer when it is not possible for the public key to be read from the document once a predefined period of time has elapsed without the document having been brought within the range of the first reader.

8. The method according to any one of the preceding claims, wherein a third operating mode of the first computer system is selected so as to transmit an order (168) of a further document to the second computer system.

9. The method according to any one of the preceding claims, wherein user data (160) of a user of the document are transmitted from the first computer system to the second computer system, wherein the user data are initially obtained as a result of the user data being input manually into the first computer system, and wherein the user data are transmitted in signed form to the second computer system.

10. A computer program product, in particular a digital storage medium, having program instructions (104), which can be executed by a computer system, for carrying out a method according to any one of the preceding claims.

11. A computer system comprising
- means (104; 146, 148, 150) for selecting at least a first or a second operating mode,
- means (104, 112) for reading a public key (172) stored in a document (114) in the first operating mode,
- means (104) for transmitting the public key in the first operating mode,
- means (104) for receiving a certificate in the first operating mode,
- means (104, 112) for writing the certificate to the document in the first operating mode,
- means (104, 120) for entering a locking feature (186) of the document in the second operating mode,
- means (104) for transmitting the locking feature in the second operating mode,
wherein the means for selection are configured such that the first operating mode is defined as a standard operating mode, wherein the second operating mode is selected automatically when it is not possible for the public key to be read from the document via the first reader.

12. The computer system according to claim 11, wherein the means for selection are configured such that a third operating mode can be selected, and comprising means (104) for sending an order (168) for a further document.

13. The computer system according to claim 11 or 12, wherein the means for selection are configured such that the selection is made via a user interface.

14. The computer system according to any one of preceding claims 11 to 13, comprising means for reading user data (160) from a data source and means (104) for transmitting the user data, wherein the data source is in particular the document and/or a second database (118).

## Revendications

1. Procédé destiné à la mise à disposition d'un certificat (174), où, dans un premier mode de fonctionnement d'un premier système informatique (100), qui est défini en tant que mode de fonctionnement normal, les étapes suivantes sont exécutées :
a) lecture d'une clé publique (172) stockée dans un document (114) avec un premier lecteur (112) du premier système informatique,
b) transmission de la clé publique (172) du premier système informatique vers un deuxième système informatique (134), où le deuxième système informatique est conçu pour la génération du certificat,
c) réception du certificat provenant du deuxième système informatique par le premier système informatique,
d) écriture du certificat sur le document par le biais du premier lecteur,
où le procédé comprend une sélection automatique d'un deuxième mode de fonctionnement lorsque la lecture de la clé publique n'est pas possible à partir du document par le biais du premier lecteur,
où, dans le deuxième mode de fonctionnement du premier système informatique, à la place des étapes a) à d) sont exécutées les étapes suivantes :
e) entrée d'un élément de verrouillage (186) du document dans le premier système informatique,
f) transmission de l'élément de verrouillage du premier système informatique au deuxième système informatique, où le deuxième système informatique a accès à une première banque de données (136) par laquelle l'élément de verrouillage est associé à la clé publique du document,
g) mise à disposition du certificat pour la transmission à un troisième système informatique (142) à la condition d'une authentification réussie vis-à-vis du deuxième système informatique à l'aide de l'élément de verrouillage,
h) réception du certificat par le troisième système informatique,
i) écriture du certificat sur le document par le biais d'un deuxième lecteur (144) du troisième système informatique.

2. Procédé selon la revendication 1, dans lequel des données d'utilisateur (160) d'un utilisateur du document sont transmises du premier système informatique vers le deuxième système informatique, où les données d'utilisateur sont lues par le premier système informatique à partir d'une source de données.

3. Procédé selon la revendication 1, dans lequel, dans le cas de la source de données, il s'agit du document (114) et/ou d'une deuxième banque de données (118).

4. Procédé selon la revendication 2 ou 3, dans lequel les données d'utilisateur sont consignées dans un formulaire électronique (152), où le formulaire est signé à l'aide d'un dispositif d'entrée à stylet (122), où le formulaire signé est signé électroniquement et est transmis du premier système vers le deuxième système informatique.

5. Procédé selon l'une des revendications précédentes, où, dans le cas du premier mode de fonctionnement, il s'agit d'un mode de fonctionnement normal, et où le deuxième mode de fonctionnement est automatiquement choisi par le premier système informatique lorsque la lecture de la clé publique n'est pas possible à partir du document, où, en particulier, le deuxième mode de fonctionnement est choisi par le premier système informatique lorsque la lecture de la clé publique n'est pas possible à partir du document parce que le document se trouve en dehors de la portée du premier lecteur (112).

6. Procédé selon la revendication 5, dans lequel le deuxième mode de fonctionnement est choisi par le premier système informatique lorsque la lecture de la clé publique n'est pas possible à partir du document après qu'un nombre prédéfini d'essais d'accès du premier système informatique au document par le biais du premier lecteur a échoué.

7. Procédé selon la revendication 5 ou 6, dans lequel le deuxième mode de fonctionnement est choisi par le premier système informatique lorsque la lecture de la clé publique n'est pas possible à partir du document après qu'un intervalle de temps prédéfini se soit écoulé sans que le document n'ait pu être mis à portée du premier lecteur.

8. Procédé selon l'une des revendications précédentes, dans lequel un troisième mode de fonctionnement du premier système informatique est choisi afin de transmettre une commande (158) d'un autre document au deuxième système informatique.

9. Procédé selon l'une des revendications précédentes, dans lequel des données d'utilisateur (160) d'un utilisateur du document sont transmises du premier système informatique vers le deuxième système informatique, où les données d'utilisateur sont d'abord collectées en ce que les données d'utilisateur sont saisies manuellement dans le premier système informatique et où les données d'utilisateur sont transmises signées au deuxième système informatique.

10. Produit d'un programme informatique, en particulier, support de stockage numérique, avec des instructions de programme (104) exécutables par un système informatique pour l'exécution d'un procédé selon l'une des revendications précédentes.

11. Système informatique doté
- de moyens (104 ; 146, 148, 150) pour la sélection d'au moins un premier ou un deuxième mode de fonctionnement,
- de moyens (104, 112) pour la lecture d'une clé publique (172) stockée dans un document (114) dans le premier mode de fonctionnement,
- de moyens (104) pour la transmission de la clé publique dans le premier mode de fonctionnement,
- de moyens (104) ^pour la réception d'un certificat dans le premier mode de fonctionnement,
- de moyens (104, 112) pour l'écriture du certificat sur le document dans le premier mode de fonctionnement,
- de moyens (104, 120) pour l'entrée d'un élément de verrouillage (186) du document dans le deuxième mode de fonctionnement,
- de moyens (104) pour la transmission de l'élément de verrouillage dans le deuxième mode de fonctionnement,
où les moyens sont conçus pour la sélection de telle manière que le premier mode de fonctionnement est défini comme le mode de fonctionnement normal, où le deuxième mode de fonctionnement est sélectionné automatiquement lorsque la lecture de la clé publique n'est pas possible à partir du document par le biais du premier lecteur.

12. Système informatique selon la revendication 11, dans lequel les moyens pour la sélection sont conçus de telle manière qu'un troisième mode de fonctionnement peut être choisi et avec des moyens (104) pour l'envoi d'une commande (168) pour un autre document.

13. Système informatique selon la revendication 11 ou 12, dans lequel les moyens pour la sélection sont conçus de telle manière que la sélection a lieu par le biais d'une interface d'utilisateur.

14. Système informatique selon l'une des revendications précédentes 11 à 13, avec des moyens pour la lecture de données d'utilisateur (160) à partir d'une source de données et des moyens (104) pour la transmission des données d'utilisateur, où, dans le cas de la source de données, il s'agit en particulier du document et/ou d'une deuxième banque de données (118).
